# EUROPEAN PATENT SPECIFICATION

(11) **EP 2 369 147 B1**
(45) Date of publication and mention of the grant of the patent: **06.03.2013**
(21) Application number: 11150990.7
(22) Date of filing: 14.01.2011
(51) Int. Cl.: F01N 3/021, F01N 3/022, F01N 13/18, F02M 25/07

(54) **Filter mounting structure for internal combustion engine**
Filtermontagestruktur für Verbrennungsmotor
Structure de montage de filtre pour moteur à combustion interne

(30) Priority: 24.03.2010 JP 2010068502
(43) Date of publication of application: 28.09.2011
(73) Proprietor: Honda Motor Co., Ltd., Tokyo 107-8556 (JP)
(72) Inventor: Masago, Kiyohiko, Saitama 351-0193 (JP); Kikuchi, Masahiro, Saitama 351-0193 (JP)
(74) Representative: Prechtel, Jörg

(56) References cited:
- WO-A1-98/12424
- JP-A- 2002 364 333
- US-A- 5 027 781
- US-A1- 2007 151 231

## Description

### BACKGROUND OF THE INVENTION

### Field of the Invention

The present invention relates to a filter mounting structure for an internal combustion engine, for mounting a filter for removing foreign matter from exhaust gases, on an exhaust piping through which exhaust gases from the engine flow.

### Description of the Related Art

Japanese Laid-Open Patent Publication (Kokai) No. H07-71329 discloses provision of a filter for removing foreign matter, such as carbon, from exhaust gases, in an EGR passage for recirculating part of exhaust gases from the engine into an intake pipe.

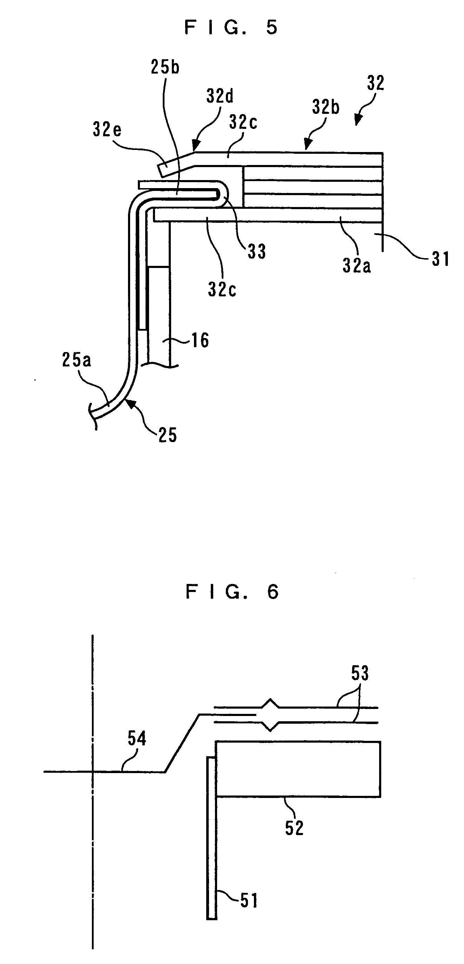

Further, conventionally, when a light and thin metal filter is mounted on an exhaust piping, there has been widely used a mounting structure shown in FIG. 6 so as to enable the filter to withstand high-temperature, high-flow rate exhaust gases. In this mounting structure, flanges 52 and 52 (only one of which is shown) are provided at a juncture of two exhaust pipes 51 and 51 (only one of which is shown), such that the flanges 52 and 52 are opposed to each other, and two gaskets 53 and 53 are interposed between the flanges 52 and 52. Further, an outer peripheral portion of a filter 54 is inserted between the gaskets 53 and 53. Then, the flanges 52 and 52 are fastened by a fastener (not shown), whereby the gaskets 53 and 53 are crushed for sandwiching the filter 54. This fixes the filter 54 in a state sealed by the gaskets 53 and 53.

In the above-described conventional mounting structure generally employed, since the filter 54 exists between portions of the flanges 52 and 52 closer to the respective exhaust pipes 51 and 51, the total thickness of these portions is larger than the total thickness of portions outward of these portions by the thickness of the filter 54. Therefore, when the gaskets 53 and 53 are crushed by fastening the flanges 52 and 52, the portions of the flanges 52 and 52 closer to the respective exhaust pipes 51 and 51 are sometimes deformed by the difference between the total thicknesses (by the thickness of the filter 54). In this case, there is a fear that sealing property is degraded by the deformation, causing leakage of exhaust gases from between the surfaces of the deformed flanges 52 and 52.

US 5,027,781 discloses an exhaust gas recirculation (EGR) system, wherein a filter made of stainless steel wire screen or ceramic is inserted in an exhaust gas inlet opening and pressed into a gasket of an EGR valve and cemented to the gasket in order to prevent carbon flakes from entering the EGR system and clogging the EGR valve.

### SUMMARY OF THE INVENTION

It is an object of the present invention to provide a filter mounting structure for an internal combustion engine, which is capable of preventing flanges from being deformed when a filter is mounted on exhaust piping, thereby improving the sealing property
of a portion where the filter is mounted and positively preventing leakage of exhaust gases, while maintaining a simple construction.

To attain the above object, the present invention provides a filter mounting structure for an internal combustion engine, for mounting, on exhaust piping through which flow exhaust gases discharged from the engine, a metal filter for removing foreign matter from the exhaust gases, including a pair of flanges provided on an end of the exhaust piping and a piping member to which the end of the exhaust piping is connected, respectively, in a manner opposed to each other, and a gasket sandwiched between the pair of flanges, characterized in that the gasket comprises a sealing portion that is disposed outward of an outer peripheral surface of the exhaust piping in a manner spaced therefrom and is sandwiched between the pair of flanges, for sealing exhaust gases, and a holding portion that extends inwardly from the sealing portion to a vicinity of the outer peripheral surface of the exhaust piping and holds the filter in a state where an outer peripheral portion of the filter is engaged with the holding portion, wherein a thickness of the sealing portion of the gasket is set to be not smaller than a total thickness of the holding portion, which is a sum of respective thicknesses of the filter and the holding portion.

According to this filter mounting structure for an internal combustion engine, the pair of flanges are provided on the end of the exhaust piping on which the filter should be mounted and the piping member to which the end of the exhaust piping is connected, respectively, in a manner opposed to each other. The gasket is sandwiched between the flanges. The gasket includes the sealing portion disposed outward of the outer peripheral surface of the exhaust piping in a manner spaced therefrom, and the sealing portion seals exhaust gases by being sandwiched between the pair of flanges. Further, the gasket includes the holding portion extending inwardly from the sealing portion to the vicinity of the outer peripheral surface of the exhaust piping, and the holding portion holds the filter by having the outer peripheral portion of the filter engaged therewith.

Further, according to the present invention, the thickness of the sealing portion of the gasket is set to be not smaller than the total thickness of the holding portion, which is the sum of the respective thicknesses of the filter and the holding portion. Because of the above-described relationship between the thicknesses, even in a state where the sealing portion of the gasket is crushed, portions of the flanges corresponding to the holding portion are not deformed. This makes it possible to improve the sealing property of the holding portion to positively prevent exhaust gases from leaking from the holding portion. Further, the basic construction that the filter is mounted by sandwiching the gasket between the pair of flanges is not different from the above-described general mounting structure, so that it is possible to obtain the above-described advantageous effects while maintaining such a simple construction.

Preferably, the filter is a metal mesh filter, and the filter mounting structure further comprises a frame that is mounted on an outer peripheral portion of the mesh filter in a manner covering the outer peripheral portion and is engaged with the holding portion of the gasket, wherein the thickness of the sealing portion of the gasket is set to be not smaller than the total thickness of the holding portion, which is a sum of respective thicknesses of the filter, the holding portion, and the frame.

Although the metal mesh filter is advantageous in that it is capable of removing foreign matter by a simple construction, there is a fear that due to engagement of the outer peripheral portion of the metal mesh filter with the holding portion of the gasket, metal wires drop off the filter, and are caught in gaps between the gasket and the flanges, which can result in the degraded sealing property. With the arrangement described above, the outer peripheral portion of the mesh filter is covered by the frame, and is engaged with the holding portion of the gasket via the frame, so that the metal wires can be prevented from dropping off the filter, and therefore it is possible to maintain an excellent sealing property. Further, the thickness of the sealing portion of the gasket is set to be not smaller than the total thickness of the holding portion, which is the sum of the respective thicknesses of the filter, the holding portion, and the frame, and hence even in the state where the sealing portion of the gasket is crushed, the portions of the flanges corresponding to the holding portion of the gasket are not deformed. Therefore, the above-described advantageous effects can also be obtained.

Preferably, the holding portion of the gasket includes upstream-side and downstream-side extending portions extending inwardly from the sealing portion in a state spaced from each other in a direction of flow of exhaust gases, the outer peripheral portion of the filter being engaged between the upstream-side and downstream-side extending portions, wherein the thickness of the sealing portion of the gasket is set to be larger than the total thickness of the holding portion, and wherein the upstream-side extending portion of the holding portion has a cover portion formed in a manner inclined toward a downstream side of exhaust gases such that the cover portion covers a gap between the upstream-side extending portion and the filter.

According to this arrangement, the holding portion of the gasket includes the upstream-side and downstream-side extending portions provided in the direction of flow of exhaust gases in the state spaced from each other. The outer peripheral portion of the filter is engaged between the upstream-side and downstream-side extending portions. Further, the thickness of the sealing portion of the gasket is set to be larger than the total thickness of the holding portion. This forms a gap between the upstream-side extending portion of the holding portion and the filter. As a consequence, foreign matter in exhaust gases can flow into this gap, and further enter the gaps between the gasket and the flanges, thereby degrading the sealing property. According to the present invention, the upstream-side extending portion of the holding portion has the cover portion formed in a manner inclined toward the downstream side of exhaust gases such that it covers the gap between the upstream-side extending portion and the filter. This makes it possible to prevent foreign matter from flowing into the gap, and therefore it is possible to maintain an excellent sealing property.

Preferably, the exhaust piping is provided with a turbine for a supercharger for driving a compressor for the supercharger, the compressor being disposed in intake piping for sucking fresh air into the engine, a purifying device for purifying exhaust gases, and an exhaust gas recirculation pipe that branches from a portion of the exhaust piping downstream of the purifying device and joins a portion of the intake piping upstream of the compressor, for recirculating part of exhaust gases into the intake piping, and wherein the filter is mounted on the exhaust gas recirculation pipe.

With this arrangement, the exhaust gas recirculation pipe is connected to a portion of the exhaust piping downstream of the purifying device and a portion of the intake piping upstream of the compressor for the supercharger. The filter is mounted on the exhaust gas recirculation pipe. This makes it possible to trap oxides generated in the purifying device and broken pieces dropped off the purifying device in the filter, thereby positively preventing the foreign matter from flowing into the compressor, and preventing damage or breakage of the compressor from occurring due to the foreign matter flowing into the compressor.

The above and other objects, features, and advantages of the present invention will become more apparent from the following detailed description taken in conjunction with the accompanying drawings.

### BRIEF DESCRIPTION OF THE DRAWINGS

FIG. 1 is a schematic diagram of an internal combustion engine to which is applied the present invention;
FIG. 2 is an enlarged view of a portion of the FIG. 1 engine, where a filter is mounted;
FIG. 3 is a further enlarged view of a filter mounting structure;
FIG. 4 is a further enlarged view of a part of FIG. 3, in a state where a gasket is crushed;
FIG. 5 is a view similar to FIG. 4, which shows a variation of the filter mounting structure; and
FIG. 6 is a view similar to FIG. 3, which shows a conventional filter mounting structure.

### DETAILED DESCRIPTION OF PREFERRED EMBODIMENTS

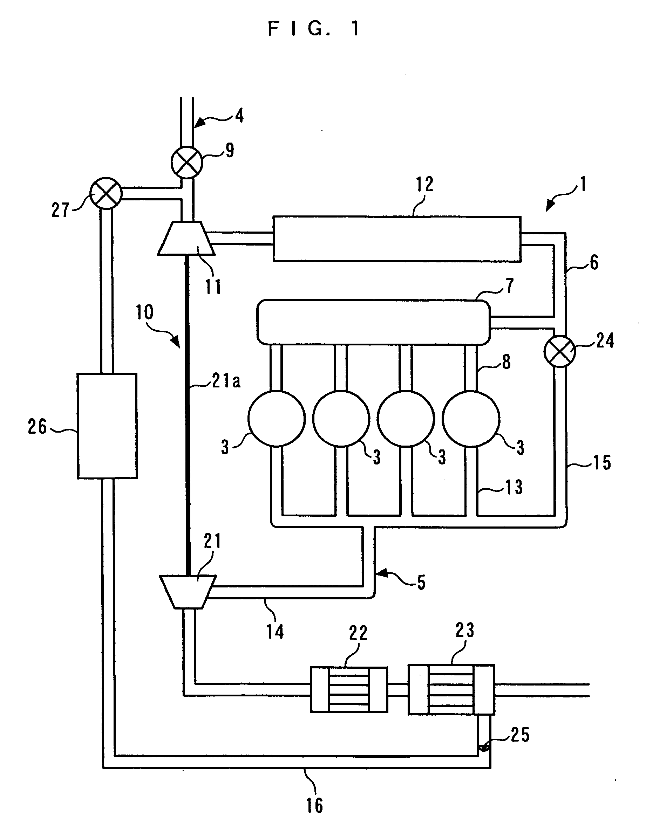

The present invention will now be described in detail with reference to the drawings showing preferred embodiments thereof. As shown in FIG. 1, an internal combustion engine (hereinafter referred to as the "engine") 1 is a diesel engine for a vehicle (not shown), which has four cylinders 3.

Intake piping 4 and exhaust piping 5 are connected to the cylinders 3. The intake piping 4 comprises an intake pipe 6, and an intake manifold 8 connected to the intake pipe 6 via an intake chamber 7. The intake manifold 8 is connected to the cylinders 3.

The intake pipe 6 is provided with a throttle valve 9, a compressor 11 of a turbocharger 10, and an intercooler 12, at respective locations from upstream to downstream in the mentioned order. The throttle valve 9 is actuated by an actuator (not shown), for adjustment of the amount of fresh air sucked into each cylinder 3. The compressor 11 is driven by a turbine 21, referred to hereinafter, for supercharging intake air. Further, the intercooler 12 cools the intake air the temperature of which has been raised by the supercharging operation of the compressor 11.

On the other hand, the exhaust piping 5 comprises an exhaust manifold 13 connected to each cylinder 3, an exhaust pipe 14 connected to the downstream side of the exhaust manifold 13, and a high-pressure EGR pipe 15 and a low-pressure EGR pipe 16 which are connected in parallel with each other between the exhaust pipe 14 and the intake pipe 6.

The exhaust pipe 14 is provided with the turbine 21 of the turbocharger 10, a NOx catalyst 22, and a DPF (Diesel Particulate Filter) 23, at respective locations from upstream to downstream in the mentioned order. The turbine 21 is driven by exhaust gases flowing through the exhaust pipe 14, for causing the compressor 11 to rotate in unison via a turbine shaft 21a such that the compressor 11 performs the supercharging operation.

The NOx catalyst 22 carries a zeolite or the like thereon. The NOx catalyst 22 traps NOx contained in exhaust gases during the lean operation of the engine 1, and releases the trapped NOx in the reduced state by being supplied with reducing agent e.g. during the rich operation of the engine 1, to thereby purify the exhaust gases. Further, the DPF 23 comprises a ceramic, and purifies the exhaust gases by collecting particulates, such as soot, from exhaust gases.

Further, the high-pressure EGR pipe 15 branches from a portion of the exhaust pipe 14 upstream of the turbine 21, and joins a portion of the intake pipe 6 downstream of the intercooler 12. This recirculates high-temperature, high-pressure exhaust gases into the intake pipe 6 as high-pressure EGR gas via the high-pressure EGR pipe 15. The high-pressure EGR pipe 15 is provided with a high-pressure EGR control valve 24 for controlling the amount of high-pressure EGR gas.

On the other hand, the low-pressure EGR pipe 16 branches from a portion of the exhaust pipe 14 downstream of the DPF 23, and joins a portion of the intake pipe 6 upstream of the compressor 11. This recirculates lower-temperature, lower-pressure exhaust gases than the high-pressure EGR gas as low-pressure EGR gas into the intake pipe 6 via the low-pressure EGR pipe 16.

Further, the low-pressure EGR pipe 16 is provided with a filter 25 for trapping foreign matter contained in the low-pressure EGR gas, an EGR cooler 26 for cooling the low-pressure EGR gas, and a low-pressure EGR control valve 27 for controlling the amount of the low-pressure EGR gas, from upstream to downstream of exhaust gases (from the DPF 23 toward the intake pipe 6) in the mentioned order. The foreign matter in the low-pressure EGR gas includes not only oxides generated on the downstream side of the DPF 23 but also ceramic pieces dropped off the DPF 23, etc.

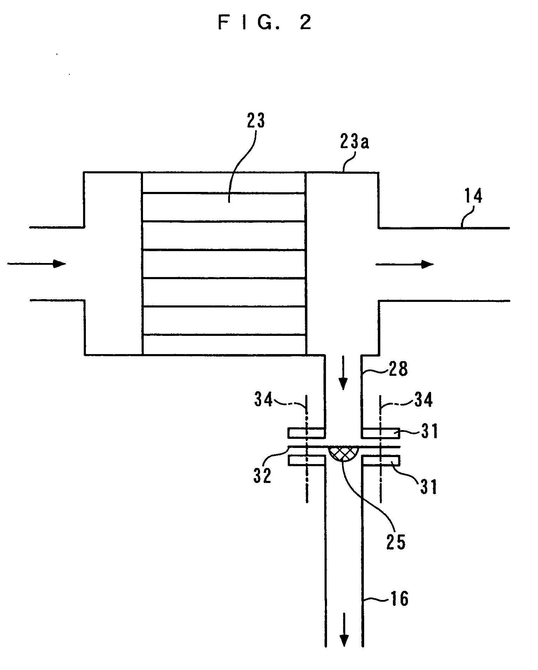

Next, the construction of the filter 25 and a mounting structure for the filter 25 will be described with reference to FIGS. 2 to 4. The filter 25 is a metal mesh filter having shape retainability, and comprises a filter body 25a having a hemispherical shape, and a brim-shaped mounting portion 25b extending continuous with the filter body 25a circumferentially along the outer periphery thereof.

The filter 25 is mounted on a portion where a connecting pipe 28 that protrudes from a casing 23a accommodating the DPF 23 and the low-pressure EGR pipe 16 are connected, in a state where the filter body 25a blocks a passage extending through the low-pressure EGR pipe 16 with an opening of the filter body 25a facing upstream. The filter 25 is mounted using a pair of flanges 31 and 31, a gasket 32 and a frame 33.

Each flange 31 is formed e.g. by a steel plate, and has a relatively thick annular plate-shape. The pair of flanges 31 and 31 are fixed to respective ends of the low-pressure EGR pipe 16 and the connecting pipe 28, and are arranged in a manner opposed to each other. The flanges 31 and 31 are fastened by fastening tools 34, such as bolts and nuts.

The gasket 32 also has an annular plate-shape, and is sandwiched between the fastened flanges 31 and 31. The gasket 32 is formed by partially joining and laminating five sheets 32a made e.g. of stainless steel plates. Out of five layers of the sheets 32a, three layers except the top and bottom layers are arranged in a manner spaced outward from an outer peripheral surface of the low-pressure EGR pipe 16. On the other hand, the top and bottom layers extend in a manner overlapping the three layers, and further inward beyond the inner ends of the three layers to the vicinity of the outer peripheral surface of the low-pressure EGR pipe 16.

With the above arrangement, a sealing portion 32b is formed by an outer part of the gasket 32 made of the five sheet 32a overlapping each other. Further, the top and bottom layers 32a and 32a extending inwardly from the sealing portion 32b correspond to upstream-side and downstream-side extending portions 32c and 32c, by which is formed a holding portion 32d.

The frame 33 is made e.g. of a stainless steel plate, and is mounted on a part of the filter 25 from a base portion of the filter body 25a to the mounting portion 25b along the whole length of the filter 25 in the circumferential direction. Further, the extreme end of the frame 33 is folded back into two so as to cover the mounting portion 25b of the filter 25 from opposite sides.

Now, the thicknesses of the above-described component elements are collectively shown. The thickness t1 of the filter 25 is set to 0.3 mm, the thickness t2 of each sheet 32a of the gasket 32 is set to 0.3 mm, and the thickness t3 of the frame 33 is set to 0.2 mm, for example.

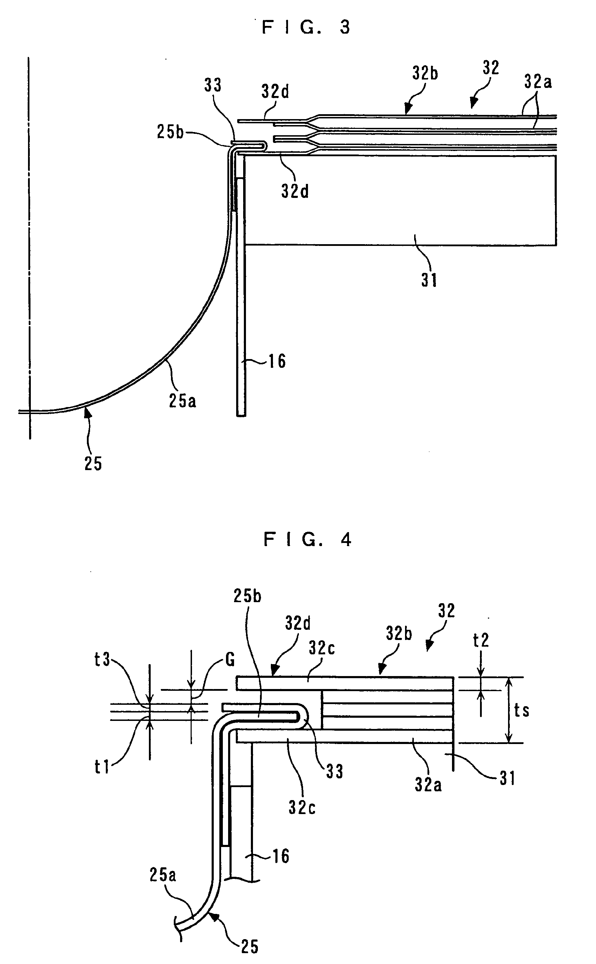

The mounting of the filter 25 using these component elements is carried out, for example, as follows: First, as shown in FIG. 3, the gasket 32 is placed on the flange 31 provided on an end of the low-pressure EGR pipe 16. Next, the mounting portion 25b of the filter 25 having the frame 33 attached thereto is engaged between the extending portions 32c and 32c of the holding portion 32d of the gasket 32. Then, the end of the low-pressure EGR pipe 16 is aligned with an end of the connecting pipe 28, and the flanges 31 and 31 are fastened in a state opposed to each other by the fastening tools 34, whereby the assembly of the component elements and the mounting of the filter 25 are completed.

In the state where the filter 25 is mounted as described above, the sealing portion 32b of the gasket 32 is crushed by fastening the flanges 31 and 31, whereby the mounting portion 25b of the filter 25 is sealed. Further, the holding portion 32d of the gasket 32 holds the filter 25 with the mounting portion 25b of the filter 25 engaged therewith.

Further, since the thickness t1 of the filter 25, the thickness t2 of each sheet 32a of the gasket 32, and the thickness t3 of the frame 33 are set as described above, the thickness ts (= 5 x t2) of the sealing portion 32b is larger than the total thickness th (= t1 + 2 x t2 + 2 x t3) of the holding portion 32d. Because of this relationship, even when the sealing portion 32b is crushed as described above, the holding portion 32d is not crushed, whereby a gap G approximately equal to the difference between the thicknesses (= ts - th) is formed between the upstream-side extending portion 32c and the filter 25.

As described hereinabove, according to the mounting structure for the filter 25 of the present embodiment, the sealing portion 32b of the gasket 32 disposed outward of the exhaust piping in a manner spaced therefrom is sandwiched between the flanges 31 and 31, and seals the mounting portion for the filter 25 in the crushed state. Further, the holding portion 32d of the gasket 32 disposed in the vicinity of the exhaust piping holds the filter 25 with the mounting portion 25b of the filter 25 engaged therewith.

Further, the thickness ts of the sealing portion 32b of the gasket 32 is set to be larger than the total thickness th of the holding portion 32d, which is the sum of the thicknesses of the filter 25, the holding portion 32d and the frame 33, and hence even in the state where the sealing portion 32b of the gasket 32 is crushed, portions of the flanges 31 corresponding to the holding portion 32d are not deformed. This makes it possible to improve the sealing property of the holding portion 32d to positively prevent exhaust gases from leaking from the holding portion 32d. Further, the basic construction that the filter 25 is mounted by sandwiching the gasket 32 between the pair of flanges 31 and 31 is not different from the above-described general mounting structure, so that it is possible to obtain the above-described advantageous effects while maintaining such a simple construction.

Further, the mounting portion 25b of the filter 25 formed by a mesh filter is covered by the frame 33, and is engaged with the holding portion 32d of the gasket 32 via the frame 33. This makes it possible to prevent metal wires from dropping off the filter 25, thereby making it possible to maintain an excellent sealing property.

Furthermore, the filter 25 is mounted on the low-pressure EGR pipe 16 that branches from the portion of the exhaust pipe 14 downstream of the DPF 23 and joins the portion of the intake pipe 6 upstream of the compressor 11 of the turbocharger 10. This makes it possible to trap oxides generated downstream of the DPF 23, ceramic pieces dropped off the DPF 23, and so forth, in the filter 25, so that it is possible to positively prevent these pieces of foreign matter from flowing into the compressor 11, and prevent damage or breakage of the compressor 11 from occurring due to the foreign matter flowing into the compressor 11.

Next, a variation of the mounting structure for the filter 25 will be described with reference to FIG. 5. As shown in FIG. 5, in this variation, the upstream-side extending portion 32c of the holding portion 32d of the gasket 32 has a cover portion 32e formed in a manner inclined toward the downstream side of exhaust gases. The remainder of the construction of the variation is the same as that of the above-described embodiment.

According to the above variation, the gap G between the upstream-side extending portion 32c of the gasket 32 and the frame 33 enclosing the mounting portion 25b of the filter 25 is covered by the cover portion 32e, it is possible to prevent foreign matter from flowing into the gap G, and therefore, it is possible to maintain an excellent sealing property.

It should be noted that the present invention is by no means limited to the embodiment described above, but can be practiced in various forms. For example, although in the above-described embodiment, to prevent the portions of the flanges 31 corresponding to the holding portion 32d from being deformed even in the state where the sealing portion 32b of the gasket 32 is crushed, the thickness ts of the sealing portion 32b is set to a larger value than that of the total thickness th of the holding portion 32d, the thickness ts of the sealing portion 32b may be set to the same value as that of the total thickness th. In this case as well, it is possible to obtain the same advantageous effects described above.

Further, although in the above-described embodiment, to protect the filter 25, the frame 33 is provided on the mounting portion 25b of the filter 25, the frame 33 may be omitted. In this case, the thickness ts of the sealing portion 32b is set to be not smaller than the total thickness th of the holding portion 32d (the sum of the thicknesses of the filter 25 and the holding portion 32d).

Furthermore, although in the above-described embodiment, the filter 25 is mounted on the low-pressure EGR pipe 16, the filter 25 may be mounted on another suitable portion of the exhaust piping 5, such as the high-pressure EGR pipe 15. Further, although in the above-described embodiment, the flange 31 toward the DPF 23 is formed on the connecting pipe 28 protruding from the casing 23a, it may be directly formed on the casing 23a. Furthermore, although in the above-described embodiment, the gasket 32 is formed by the plurality of laminated sheets 32a, the gasket 32 may be integrally formed such that it includes a sealing portion and a holding portions which satisfy the requirements of the present invention.

Further, although in the above-described embodiment, the present invention is applied to the diesel engine installed on an automotive vehicle by way of example, this is not limitative, but it can be applied to various types of engines, such as gasoline engines, and engines for other than automotive vehicles, such as engines for ship propulsion machines, e.g. an outboard motor having a vertically-disposed crankshaft.

A filter mounting structure for an internal combustion engine, capable of preventing deformation of flanges when mounting a filter on exhaust piping, thereby improving the sealing property of a filter-mounted portion and positively preventing leakage of exhaust gases, while maintaining a simple construction. In the filter mounting structure, a pair of flanges are provided on a low-pressure EGR pipe and a connecting pipe, respectively. A gasket is sandwiched between the flanges. The gasket has a sealing portion for sealing exhaust gases, disposed outward of the outer peripheral surface of the low-pressure EGR pipe in a manner spaced therefrom and sandwiched between the flanges, and a holding portion for holding the filter, engaged with the filter mounting portion and disposed inward of the sealing portion. The thickness of the sealing portion is set to be not smaller than the total thickness of the filter and the holding portion.

## Claims

1. A filter mounting structure for an internal combustion engine, for mounting, on exhaust piping (16) through which flow exhaust gases discharged from the engine (1), a metal filter (25) for removing foreign matter from the exhaust gases, including:
a pair of flanges (31, 31) provided on an end of the exhaust piping and a piping member (28) to which the end of the exhaust piping is connected, respectively, in a manner opposed to each other; and
a gasket (32) sandwiched between said pair of flanges (31, 31),
wherein said gasket (32) comprises:
a sealing portion (32b) that is disposed outward of an outer peripheral surface of the exhaust piping in a manner spaced therefrom and is sandwiched between said pair of flanges (31, 31), for sealing exhaust gases; and
a holding portion (32d) that extends inwardly from said sealing portion (32b) to a vicinity of the outer peripheral surface of the exhaust piping and holds said filter (25) in a state where an outer peripheral portion (25b) of said filter (25) is engaged with said holding portion (32d),
wherein said filter (25) is a metal mesh filter, **characterized in that**
the filter mounting structure further comprises a frame (33) that is mounted on an outer peripheral portion of said mesh filter in a manner covering the outer peripheral portion and is engaged with said holding portion (32d) of said gasket (32),
wherein the thickness (ts) of said sealing portion (32b) of said gasket (32) is set to be not smaller than the total thickness (th) of said holding portion, which is a sum of respective thicknesses of said filter (25), said holding portion (32d), and said frame (33).

2. The filter mounting structure as claimed in claim 1, wherein said holding portion (32d) of said gasket (32) includes upstream-side and downstream-side extending portions (32c, 32c) extending inwardly from said sealing portion (32b) in a state spaced from each other in a direction of flow of exhaust gases, said outer peripheral portion of said filter (25) being engaged between said upstream-side and downstream-side extending portions (32c, 32c),
wherein the thickness (ts) of said sealing portion (32b) of said gasket (32) is set to be larger than the total thickness (th) of said holding portion, and
wherein said upstream-side extending portion (32c) of said holding portion (32d) has a cover portion (32e) formed in a manner inclined toward a downstream side of exhaust gases such that said cover portion (32e) covers a gap (G) between said upstream-side extending portion (32c) and said filter (25).

3. The filter mounting structure as claimed in claim 1 or 2, wherein the exhaust piping is provided with a turbine (21) for a supercharger (10) for driving a compressor (11) for the supercharger (10), the compressor (11) being disposed in intake piping (6) for sucking fresh air into the engine (1),
a purifying device (23) for purifying exhaust gases, and
an exhaust gas recirculation pipe (16) that branches from a portion of the exhaust piping downstream of said purifying device and joins a portion of the intake piping upstream of the compressor (11), for recirculating part of exhaust gases into the intake piping, and
wherein said filter (25) is mounted on said exhaust gas recirculation pipe.

## Patentansprüche

1. Filtermontagestruktur für einen Verbrennungsmotor, um an einer Abgasrohrleitung (16), durch welche von dem Motor (1) abgegebene Abgase strömen, einen Metallfilter (25) anzubringen, um Fremdstoffe aus den Abgasen zu entfernen, umfassend:
ein Paar Flansche (31, 31), welche jeweils an einem Ende von der Abgasrohrleitung und an einem Rohrleitungselement (28), mit welchem das Ende von der Abgasrohrleitung verbunden ist, in einer einander gegenüberliegenden Weise vorgesehen sind; und
eine Dichtung (32), welche zwischen dem Paar von Flanschen (31, 31) aufgenommen ist, wobei die Dichtung (32) umfasst:
einen Abdichtungsabschnitt (32b), welcher auswärts von einer Außenumfangsfläche von der Abgasrohrleitung in einer davon beabstandeten Weise angeordnet ist und zwischen dem Paar von Flanschen (31, 31) aufgenommen ist, um Abgase abzudichten; und
einen Halteabschnitt (32d), welcher sich von dem Abdichtungsabschnitt (32b) einwärts zu einer Umgebung von der Außenumfangsfläche von der Abgasrohrleitung erstreckt und den Filter (25) in einem Zustand hält,
in welchem ein Außenumfangsabschnitt (25b) vorn dem Filter (25) mit dem Halteabschnitt (32d) in Eingriff ist,
wobei der Filter (25) ein Metallnetzfilter ist,
**dadurch gekennzeichnet,**
**dass** die Filtermontagestruktur ferner einen Rahmen (33) umfasst, welcher an einem Außenumfangsabschnitt von dem Netzfilter in einer den Außenumfangsabschnitt abdeckenden Weise angebracht ist und mit dem Halteabschnitt (32d) von der Dichtung (32) im Eingriff ist,
wobei die Dicke (ts) von dem Abdichtungsabschnitt (32b) von der Dichtung (32) so eingestellt ist, dass sie nicht kleiner als die Gesamtdicke (th) von dem Halteabschnitt ist, welche eine Summe von jeweiligen Dicken von dem Filter (25), dem Halteabschnitt (32d) und dem Rahmen (33) ist.

2. Filtermontagestruktur nach Anspruch 1, wobei der Halteabschnitt (32d) von der Dichtung (32) sich stromaufwärtsseitig und stromabwärtsseitig erstreckende Abschnitte (32c, 32c) umfasst, welche sich von dem Abdichtungsabschnitt (32b) in einem Zustand einwärts erstrecken, in welchem sie voneinander in einer Abgasströmungsrichtung beabstandet sind, wobei der Aüßenumfangsabschnitt von dem Filter (25) zwischen den sich stromaufwärtsseitig und stromabwärtsseitig erstreckenden Abschnitten (32c, 32c) in Eingriff gebracht ist,
wobei die Dicke (ts) von dem Abdichtungsabschnitt (32b) von der Dichtung (32) größer eingestellt ist als die Gesamtdicke (th) von dem Halteabschnitt, und
wobei der sich stromaufwärtsseitige erstreckende Abschnitt (32c) von dem Halteabschnitt (32d) einen Abdeckungsabschnitt (32e) hat, welcher in einer Weise ausgebildet ist, welche zu einer stromabwärtigen Seite von Abgasen hin geneigt ist, so dass der Abdeckabschnitt (32e) einen Spalt (G) zwischen dem sich stromaufwärtsseitig erstreckenden Abschnitt (32c) und dem Filter (25) abdeckt.

3. Filtermontagestruktur nach Anspruch 1 oder 2, wobei die Abgasrohrleitung versehen ist mit einer Turbine (21) für einen Turbolader (10), um einen Verdichter (11) für den Turbolader (10) anzutreiben, wobei der Verdichter (11) in einer Einlassrohrleitung (6) angeordnet ist, um Frischluft in den Motor (1) zu saugen,
einer Reinigungseinrichtung (23), um Abgase zu reinigen, und
einer Abgasrezirkulationsleitung (16), welche von einem Abschnitt von der Abgasrohrleitung stromabwärts von der Reinigungseinrichtung abzweigt und mit einem Abschnitt von der Einlassrohrleitung stromaufwärts von dem Verdichter (11) verbunden ist, um einen Teil von Abgasen in die Einlassrohrleitung zu rezirkulieren, und
wobei der Filter (25) an der Abgasrezirkulationsleitung angebracht ist.

## Revendications

1. Structure de montage de filtre pour un moteur à combustion interne, pour monter, sur un tuyau d'échappement (16) à travers lequel s'écoulent des gaz d'échappement déchargés à partir du moteur (1), un filtre métallique (25) pour enlever les corps étrangers des gaz d'échappement, comprenant:
une paire de brides (31, 31) prévues sur une extrémité du tuyau d'échappement, et un élément de tuyau (28) auquel l'extrémité du tuyau d'échappement est connectée, respectivement, d'une façon opposée les uns aux autres; et
une garniture (32) qui est coincée entre ladite paire de brides (31, 31),
dans laquelle ladite garniture (32) comprend:
une partie d'étanchéité (32b) qui est disposée à l'extérieur d'une surface périphérique extérieure du tuyau d'échappement d'une façon espacée de celui-ci et qui est coincée entre ladite paire de brides (31, 31), afin d'isoler les gaz d'échappement; et
une partie de maintien (32d) qui s'étend vers l'intérieur à partir de ladite partie d'étanchéité (32b) jusqu'à un voisinage de la surface périphérique extérieure du tuyau d'échappement et qui maintient ledit filtre (25) dans un état dans lequel une partie périphérique extérieure (25b) dudit filtre (25) est engagée avec ladite partie de maintien (32d),
dans laquelle ledit filtre (25) est un filtre en mailles métalliques, **caractérisée en ce que**:
la structure de montage de filtre comprend en outre un cadre (33) qui est monté sur une partie périphérique extérieure dudit filtre en mailles d'une manière qui recouvre la partie périphérique extérieure, et qui est engagé avec ladite partie de maintien (32d) de ladite garniture (32),
dans laquelle l'épaisseur (ts) de ladite partie d'étanchéité (32b) de ladite garniture (32) est déterminée de manière à ne pas être plus petite que l'épaisseur totale (th) de ladite partie de maintien, qui est une somme des épaisseurs respectives dudit filtre (25), de ladite partie de maintien (32d) et dudit cadre (33).

2. Structure de montage de filtre selon la revendication 1, dans laquelle ladite partie de maintien (32d) de ladite garniture (32) comprend des parties s'étendant du côté amont et du côté aval (32c, 32c) qui s'étendent vers l'intérieur à partir de ladite partie d'étanchéité (32b) dans un état espacé les unes des autres dans une direction d'écoulement des gaz d'échappement, ladite partie périphérique extérieure dudit filtre (25) étant engagée entre lesdites parties s'étendant du côté amont et du côté aval (32c, 32c),
dans laquelle l'épaisseur (ts) de ladite partie d'étanchéité (32b) de ladite garniture (32) est déterminée de manière à être plus grande que l'épaisseur totale (th) de ladite partie de maintien, et
dans laquelle ladite partie s'étendant du côté amont (32c) de ladite partie de maintien (32d) présente une partie de recouvrement (32e) qui est formée d'une façon inclinée en direction d'un côté aval des gaz d'échappement, de telle sorte que ladite partie de recouvrement (32e) couvre un espace (G) entre ladite partie s'étendant du côté amont (32c) et ledit filtre (25).

3. Structure de montage de filtre selon la revendication 1 ou 2, dans laquelle le tuyau d'échappement est pourvu d'une turbine (21) pour un turbocompresseur (10) pour entraîner un compresseur (11) pour le turbocompresseur (10), le compresseur (11) étant disposé dans le tuyau d'admission (6) pour aspirer de l'air frais dans le moteur (1),
un dispositif de purification (23) pour purifier des gaz d'échappement, et
un tuyau de recirculation de gaz d'échappement (16) qui est dérivé à partir d'une partie du tuyau d'échappement en aval dudit dispositif de purification et qui rejoint une partie du tuyau d'admission en amont du compresseur (11) afin de faire recirculer une partie des gaz d'échappement dans le tuyau d'admission, et
dans laquelle ledit filtre (25) est monté sur ledit tuyau de recirculation de gaz d'échappement.
